# EUROPEAN PATENT APPLICATION

(11) **EP 1 679 343 A1**
(43) Date of publication of application: **12.07.2006**
(21) Application number: 05100047.9
(22) Date of filing: 06.01.2005
(51) Int. Cl.: C08L 23/02, C08L 83/04, C08L 53/02, C09J 7/02

(54) **Polymer compound**

(71) Applicant: A. SCHULMAN PLASTICS, 2880 Bornem (BE)
(72) Inventor: Janssens, Marcel, 9200, Dendermonde (BE); Daponte, Tony, 2070, Zwijndrecht (BE)
(74) Representative: Luys, Marie-José A.H.

(57) **Abstract**

A polymer compound comprising a polyolefin base resin, an ultra high viscosity (uhv) silicone gum and a compatibilizer; a pellet comprising said polymer compound, a method of producing this pellet, monolayer or multilayer films obtainable from the polymer compound or the pellets, a method for producing said multilayer films and a system comprising such films as a release carrier sheet and an adhesive label deposited thereon.

## Description

The present invention relates to a polymer compound, a pellet comprising said polymer compound, a method of producing this pellet, monolayer or multilayer films obtainable from the polymer compound or the pellets, a method for producing said multilayer films and a system comprising such films as a release carrier sheet and an adhesive label deposited thereon.

Adhesive labels for distribution are generally known in the art. Such labels comprise a base sheet which may be printed or which may be suitable to write on, and an adhesive layer which adheres to the surface on which the labels are supposed to be applied. Originally, the base sheet was made of paper. However, because of the increased requirements concerning the properties of such labels, especially with respect to the resistance to any kind of damages like scratching, etching, degradation by moisture or liquids, recently more and more base sheets made of plastic were used instead of paper base sheets. This is particularly attractive as there are additives available to be incorporated into the plastic base material which impart a paper-like appearance to those plastic base sheets. Thus, it is possible to obtain labels with a paper-like appearance but plastic properties.

To enable a commercial distribution of such adhesive labels they are provided on release carrier sheets. Thereby, they can be easily sold, distributed and stored without the requirement to use them directly after having applied the adhesive layer thereon.

Usually, the release carrier sheet comprises a paper sheet coated with a two-component silicone release layer. The coating is put offline onto one side of the paper sheet and the coated sheet is then passed through an oven at elevated temperatures to induce the curing of the two-component silicone compound. The curing of the coating avoids the transfer of silicone from the coated side of the paper sheet to its opposite side.

The adhesive label is then deposited on the side of the paper sheet bearing the cured silicone release coating. The silicone release coating enables an easy peel-off of the adhesive label with release forces of < 1 N/15 mm.

However, the above described release carrier sheets are comparatively expensive mainly because of their two-step producing procedure. Moreover, the release carrier sheet is not ecologically friendly as the release carrier sheet can not be recycled with conventional paper waste because of the combination of the paper sheet and silicone coating.

Thus, it is an object of the present invention to provide a composition which may be transformed into release sheets applicable as carrier sheets for adhesive layers which do not exhibit the drawbacks of the state of the art release carrier sheets. Moreover, the release force for peeling-off the adhesive layer from the release carrier sheet should be more or less of the same order of magnitude as is achieved with respect to the release carrier sheets of the state of the art. It should also be taken into account that no transfer of the components from the release carrier sheet into the glue of the adhesive label occurs when releasing the label.

The above problem is solved by providing a polymer compound comprising a polyolefin base resin, an ultra high viscosity (UHV) silicone gum and a compatibilizer. The polymer compound preferably is homogenized by conventional means known in the art like internal mixers or kneaders, either with or without the application of heat.

Suitable polyolefin base resins which may be used in the present polymer compound represent high density polyethylene (HDPE), low density polyethylene (LDPE), copolymers of ethylene and alpha-olefins such as linear low density polyethylene (LLDPE), polybutene, homopolymer polypropylene, random copolymer polypropylene, block copolymer polypropylene, polypropylene terpolymers, ethylene vinylester copolymers, like ethylene vinylacetate copolymers, ionomers or mixtures thereof. LLDPE represents polyethylene which preferably is copolymerised with longchain olefins, in particular with butene or octene. The other comonomer units beside the propylene comonomer unit forming the above mentioned propylene copolymers or terpolymers are exemplified by ethylene, butene and/or hexene.

lonomers according to the present invention mean thermoplastic copolymers of ethylene and carboxylic acid containing monomers which are partially present in the form of salts with elements of the first and second group like sodium, potassium, magnesium or zinc and are thermo-reversibly cured via the metal ions. Preferably, the ionomers used in the present polymer compound are fully or partially neutralized and selected from the group comprising ethylene methacrylic acid copolymers, ethylene butacrylic acid copolymers, ethylene acrylic acid copolymers or mixtures thereof.

The polyolefin base resin preferably is contained in the polymer compound of the present invention in an amount of from 35 to 80 wt.%, more preferred of from 40 to 70 wt.%.

The silicone gum used in the polymer compound of the present invention preferably represents a polydiorganosilioxane, in particular a polydialkylsiloxane like polydimethylsiloxane. The silicone gum may also contain additives or fillers. The silicone gum exhibits an ultra high viscosity and is known in the art as UHV silicone gum.

It is particular advantageous to use UHV silicone gums with a viscosity in the range of from 8 to 15 million mm²/s, preferably of from 9 to 12 million mm²/s, more preferred of from 10 milllion mm²/s. An appropriate silicone gum for use in the present application is GENIOPLAST® Gum provided by Wacker, Germany.

The silicone gum should be present in the polymer compound of the present invention in an amount of from 5 to 40 wt.%, preferably of from 10 to 35 wt.%, most preferred of 30 wt.%.

In a preferred embodiment the compatibilizer is selected from the group comprising linear styrene butadiene block copolymers, radial styrene butadiene block copolymers, linear styrene isoprene block copolymers, radial styrene isoprene block copolymers, styrene ethylene propylene block copolymers, polycaprolactones or mixtures thereof. Suitable compatibilizers to be used in the present invention represent Finaprene® and Finaclear® made by ATOFINA, Kraton® D and Kraton® G made by KRATON, and polycaprolactones known asTone Polymers made by DOW Chemical.

The compatibilizer preferably is contained in the polymer compound in an amount of from 5 to 20 wt.%, preferably of from 8 to 15 wt.%, most preferred of 10 wt.%.

Moreover, it is advantageous if the polymer compound according to the present invention additionally contains one or more fillers. Suitable fillers which may be used in the polymer compound represent talc, china clay, calcium carbonate, barium sulfate or mixtures thereof, with calcium carbonate being preferred.

Preferably, the filler should be contained in the polymer compound in an amount of from 5 to 40 wt.%, preferably of from 10 to 30 wt.%, most preferred of 20 wt.%.

It is also possible that the polymer compound according to the invention contains further additives imparting specific desired properties to films obtainable from said polymer compounds, like antibacterial agents or organic or inorganic pigments.

A further object of the present invention is a pellet which comprises the above described polymer compound and which may be provided ready to use.

It is particularly preferred to produce the above pellet by a method which comprises melting the polymer compound according to the present invention, compounding, cooling and granulating it into pellets.

The production of the pellets may be carried out in extrusion or compounding lines known in the art like a Banburry internal mixer, a ZSK twin-screwer or a Buss Co-kneader from Couperion, Germany.

The polymer compound according to the present invention as well as the pellets obtainable thereof may be used to form monolayer or multilayer films. Although the number of layers in the multilayer film is not specifically limited it is preferred that the multilayer film comprises two to four layers, most preferred two layers.

When using the polymer compound or the pellets according to the present invention to form multilayer films at least one of the surface layers of the resulting film has to be formed from said polymer compound or said pellets. Said layer represents the release layer which also functions as a base layer. The release layer (skin layer) should have an overall thickness of from 2 to 50 µm, preferably of about 25 µm. However, it is also possible that more than one layer can be formed from the polymer compound or the pellets according to the invention.

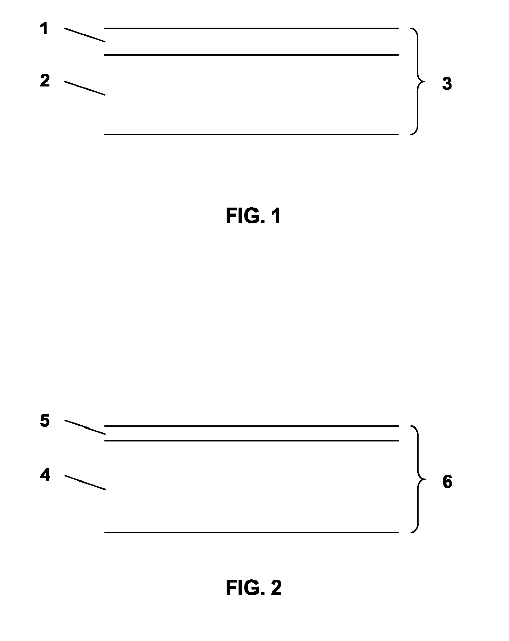

When transforming the pellet according to the invention into the release layer of a multilayer film (like layer **1** of the two-layer film in **FIG. 1**), the adjacent layer (like layer **2** of the two-layer film in **FIG. 1**) should be based on the same polyolefin as used in the release layer, in order to avoid delamination of the two layers.

The production of the film may proceed by conventional methods of the art like casting, calendaring, extrusion, in particular blow molding. In case the film is a multilayer film it is preferably obtained by co-extrusion or extrusion lamination.

The so produced film, in case of a multilayer film the complete film, preferably has a thickness in the range of from 30 to 250 µm, more preferred of from 50 to 200 µm, most preferred of from about 100 µm.

In a preferred embodiment the multilayer film has at least one layer which is obtainable from a polyolefin composition which comprises a polyolefin selected from the group comprising high density polyethylene (HDPE), low density polyethylene (LDPE), copolymers of ethylene and alpha-olefins such as linear low density polyethylene (LLDPE), polybutene, homopolymer polypropylene, random copolymer polypropylene, block copolymer polypropylene, polypropylene terpolymers, ethylene vinylacetate copolymers, ionomers or mixtures thereof. The specification of the LLDPE, the comonomer units beside propylene in the polypropylene co- and terpolymers and the ionomers is the same as mentioned above with respect to the polymer compound. The polyolefin may be the same as the one used in the polymer compound or a different one. Preferably, they are identical. It is also possible to form two or more layers from polymer compounds or pellets according to the invention which contain different polyolefin base resins and/or two or more layers from polyolefin compositions specified above comprising different polyolefins.

Although the number of layers in the multilayer film which are obtainable from the above specified polyolefin composition is not limited, preferably the film comprises one or two layers thereof, more preferred one layer forming a base layer and representing the surface opposite to the release layer. Such a layer or combination of layers should have an overall thickness of from 40 to 150 µm, preferably of about 75 µm.

Optionally, further additives imparting specific properties to the resulting film may be added to the polyolefin like the ones mentioned above with regard to the polyolefin compound according to the invention. However, it is especially preferred to add masterbatches to this polyolefin or mixture of polyolefins which impart a paper-like appearance to the corresponding layer of the obtained film (like layer **2** of the two-layer film in **FIG. 1**). Such a masterbatch may be exemplified by Papermatch® which is commercially available from A. Schulman, Belgium.

Preferably, the kinds and amounts of the components used in the polymer compound according to the invention are chosen such that a silicon transfer from the release layer to the opposite layer takes place only to a small extent or does not occur at all.

The most preferred embodiment with respect to a multilayer film comprises two layers, one obtainable from the polymer compound or the pellets according to the invention and one obtainable from the above specified polyolefin composition, with the polyolefin forming the polyolefin base resin being identical in both layers but the base layer additionally containing the above mentioned Papermatch® masterbatch in an amount of from 30 - 70 wt.%, preferably of from 40 - 60 wt.%, most preferred of about 50 wt.%.

The final film may be wound up and converted into sheets on which adhesive labels can be deposited. Said labels are deposited with the glue- or adhesive side onto the surface of the film having the release properties induced by the layer obtainable from the polymer compound or the pellets of the invention.

A further object of the present invention is a system comprising a monolayer or multilayer film according to the invention as described above as a release carrier sheet and an adhesive label, wherein the adhesive label adheres to the releasing surface of the film (release layer) which is obtainable from the polymer compound or the pellets according to the invention.

Adhesive labels suitable for the use in the present invention represent adhesive labels known in the art, preferably ones which comprise a base sheet and an adhesive coating.

It is preferred that the base sheet of the label is obtainable from a polyolefin composition, preferably comprising a polyolefin selected from the group comprising typically natural or white coloured high density polyethylene (HDPE), low density polyethylene (LDPE), copolymers of ethylene and alpha-olefins such as linear low density polyethylene (LLDPE), polybutene, polypropylene homopolymer, bi-oriented polypropylene (BOPP), random copolymer polypropylene, block copolymer polypropylene, polypropylene terpolymers, ethylene vinylester copolymers, like ethylene vinylacetate copolymers, ionomers or mixtures thereof. The specification of the LLDPE, the comonomer units beside propylene in the polypropylene co- and terpolymers and the ionomers is the same as mentioned above with respect to the polymer compound. The polyolefin may be the same in all of the layers which means the film layers (at least release layer and base layer) as well as the base sheet of the label. However, it is also possible that the polyolefin is different in each of those layers, that the ones of the film are identical but different from the one of the base sheet of the label, or that the polyolefin of the base sheet of the label is identical with at least one polyolefin of the film layers. Preferably, the polyolefin is identical in all of the layers (see for example the description of **FIG.1** and **2** below).

Optionally further additives imparting specific properties to the resulting label may be added to the polyolefin of the base sheet like the ones mentioned above with regard to the polyolefin compound according to the invention. However, it is especially preferred to add masterbatches to the polyolefin or mixture of polyolefins which impart a paper-like appearance to the obtained label. Such a masterbatch may be exemplified by Papermatch® which is commercially available from A. Schulman, Belgium.

Adhesive coatings suitable for the use in the present invention represent conventional adhesive coatings known in the art, preferably acrylic based or polyurethane based adhesives.

The most preferred system comprises the above described most preferred film in combination with an adhesive label having a base sheet being identical with the polyolefin base layer of the film comprising the Papermatch® masterbatch.

It is especially preferred that the kinds and amounts of the components in the polymer compound according to the invention are chosen such that in the above described system the release force for peeling-off the adhesive label from the release carrier sheet is ≤ 1 N / 15 mm, determined as described in the examples below. Moreover, the kinds and amounts of the components in the polymer compound according to the invention preferably are chosen such that in the above described system no silicone extraction occurs when peeling the adhesive label off the release layer of the release carrier sheet.

### Description of the figures:

**FIG. 1** shows the side view of a preferred two-layer release film composition.
**FIG. 2** shows the side view of a conventional label film composition.

It is especially preferred to use the polymer compound or the pellets according to the present invention to form two-layer films as shown in FIG. 1. This two-layer film 3 preferably comprises a release or skin layer 1 which is formed of the inventive polymer compound or the inventive pellets. It is particularly advantageous to use HDPE based or PP based release layers in a thickness of 25 µm. The preferred two-layer film 3 further comprises a base layer 2 which preferably is formed of said olefin used in the release layer in combination with the corresponding HDPE based or PP based Papermatch, respectively. The base layer **2** should have a thickness of 75 µm to result in a total film thickness of 100 µm.

In a preferred embodiment such a two-layer release film **3** is deposited with the release layer **1** onto a conventional label film composition **6** shown in **FIG. 2** to form a system according to the present invention. The label **6** should have a base sheet **4** which may be formed of a combination of polyolefin and Papermatch, bi-oriented PP (BOPP) or natural or white coloured HDPE, PP or similar olefins as specified above. The label **6** additionally comprises an adhesive coating **5** deposited onto the base sheet **4.**

As can be seen in the following examples the polymer compound as well as the pellets according to the present invention have been found to impart a lot of advantageous properties to release carrier sheets formed thereof as specified above, when adhesive labels are fixed on the releasing surface of the layer obtainable from the inventive polymer compound or pellets. For example, little or no transfer of silicone from the releasing side to the opposite base side of such release carrier sheets, especially two layer sheets, is observed.

Moreover, a transfer of silicone into the glue of the adhesive label occurs either only to a small extent or it does not occur at all. The release force required to peel-off the adhesive label from the release carrier sheet is in a comparable order of magnitude than the one required according to the state of the art and may be decreased to < 1 N/15 mm. It has also been surprisingly found that the release force can be further decreased by additionally using a filler and increasing its amount.

The release carrier sheets are more ecologically friendly than the release carrier sheets of the state of the art as they can easily be recycled together with the usual polyolefin waste. Furthermore, the multilayer release carrier sheets may be produced by co-extrusion in one step in comparison with the two-step procedure according to the state of the art. This reduces the apparative expenditure as well as the energy consumption.

The present invention will be further elucidated in the following examples. Percentages mentioned therein refer to wt.% if not otherwise indicated.

### Examples

### Production of the release carrier sheet/adhesive label-system

**Table 1** shows the compositions of inventive polymer compounds E1 to E3 using a HDPE base resin. CE1 to CE4 represent the compositions of corresponding comparative polymer compounds.

### Step 1:

The specified compositions except the one of CE1 were compounded in a Banburry internal mixer at a temperature of about 230°C, followed by cooling and granulation into pellets.

### Step 2:

The pellets obtained in step 1 in their pure form were co-extruded with a composition of HDPE mfi 9 (density: 0,961 g/cm³ at 20°C) and Papermatch® NG 4228/50 (HDPE based) in an amount of 50 wt.% were co-extruded to result in a two layer film (**3** in **FIG. 1**) with the release layer (**1**) obtained from the pellets having a thickness of 25 µm and the HDPE/Papermatch® base layer (**2**) having a thickness of 75 µm.

### Step 3:

An adhesive label having a conventional acrylic adhesive coating was deposited onto the release layer of the release carrier sheet of step 2.

**Table 2** shows the compositions of inventive polymer compounds E4 to E6 using a PP homopolymer base resin (mfi 10). CE5 and CE6 represent the compositions of corresponding comparative PP homopolymer compounds. The system is produced in analogy to the systems mentioned above but using the specified PP homopolymer instead of HDPE. The co-extrusion proceeds with the PP-pellets and a composition of said PP homopolymer and Papermatch® NG 4006/50 UN (PP based) in an amount of 50 wt.%. The thickness of release layer and base layer is identical to the ones specified above.

### Determination of properties

### 1) Measurement of Release Force

Strips (15 x 200 mm) are cut out of the systems produced in step 3 above. A small end-part of the label is peeled-off the release carrier sheet and both parts, the label end-part and the end of the release carrier sheet are fixed into the grips of a state of the art tensile machine of the Instron type. The release force is the force required to separate the label from the release carrier sheet.

### 2) Transfer of Silicone

It is visually estimated whether silicone is transferred to the side of the release carrier sheet opposite to the release layer (i.e. to the base layer) and rated as "YES" or "NO".

### 3) Extraction of Silicone

The label is peeled-off from the release carrier sheet of a 10 x 10 cm specimen of the systems obtained according to step 3 above and the amount of mat spots on the adhesive side of the label is visually estimated and rated as:
- Class A =: >50 - 100 % of the surface of the label is coated with silicone
- Class B =: >30 - 50 % of the surface is covered
- Class C =: 5 - 30 % of the surface is covered
- Class D =: only some little spots are still visible (< 5 % of the surface)
- Class E =: no transfer and no mat spots

**Table 1**

| | CE1 | CE2 | CE3 | CE4 | E1 | E2 | E3 |
|---|---|---|---|---|---|---|---|
| HDPE | 100 | 60 | 50 | 50 | 50 | 60 | 70 |
| silicone oil 30 000 mm²/s | - | 20 | - | - | - | - | - |
| silicone oil 1 million mm²/s | - | - | 20 | - | - | - | - |
| UHMW silicone gum 5 million mm²/s | - | - | - | 20 | - | - | - |
| UHMW silicone gum 10 million mm²/s | - | - | - | - | 20 | 10 | 20 |
| calciumcarbonate | - | 20 | - | 20 | 20 | 20 | - |
| talc | - | - | 20 | - | - | - | - |
| Kraton D | - | 10 | 10 | 10 | 10 | 10 | - |
| Finaprene | - | - | - | - | - | - | 10 |
| | | | | | | | |
| release force [N/15 mm] | 36 | 12 | 8 | 5 | 2 | 3 | 1 |
| silicone transfer | - | N | N | N | N | N | N |
| silicone extraction [class] | - | A | C | C | D | E | E |

**Table 2**

| | CE5 | CE6 | E4 | E5 | E6 |
|---|---|---|---|---|---|
| PP homopolymer | 55 | 100 | 55 | 40 | 50 |
| UHMW silicone gum 10 million mm²/s | 25 | - | 15 | 30 | 30 |
| calciumcarbonate | 20 | - | 20 | 20 | 10 |
| Finaprene | - | - | 10 | 10 | 10 |
| | | | | | |
| release force [N/15 mm] | 1,1 | 35 | 3,8 | 0,5 | 0,8 |
| silicone transfer | Y | - | N | N | N |
| silicone extraction [class] | B | _ | D | E | E |

## Claims

1. Polymer compound comprising a polyolefin base resin, an ultra high viscosity (UHV) silicone gum and a compatibilizer.

2. Polymer compound according to claim 1 **characterized in that** the polyolefin base resin is selected from the group comprising high density polyethylene (HDPE), low density polyethylene (LDPE), copolymers of ethylene and alpha-olefins such as linear low density polyethylene (LLDPE), polybutene, homopolymer polypropylene, random copolymer polypropylene, block copolymer polypropylene, polypropylene terpolymers, ethylene vinylester copolymers, ionomers or mixtures thereof.

3. Polymer compound according to claim 2 **characterized in that** the ionomers are fully or partially neutralized and selected from the group comprising ethylene methacrylic acid copolymers, ethylene butacrylic acid copolymers, ethylene acrylic acid copolymers or mixtures thereof.

4. Polymer compound according to any of claims 1 to 3 **characterized in that** the UHV silicone gum has a viscosity of from 8 to 15 million mm²/s, preferably of from 9 to 12 million mm²/s, more preferred of 10 million mm²/s.

5. Polymer compound according to any of claims 1 to 4 **characterized in that** the UHV silicone gum is contained in an amount of from 5 to 40 wt.%, preferably of from 10 to 35 wt.%, most preferred of 30 wt.%.

6. Polymer compound according to any of claims 1 to 5 **characterized in that** the compatibilizer is selected from the group comprising linear styrene butadiene block copolymers, radial styrene butadiene block copolymers, linear styrene isoprene block copolymers, radial styrene isoprene block copolymers, styrene ethylene propylene block copolymers, polycaprolactones or mixtures thereof.

7. Polymer compound according to any of claims 1 to 6 **characterized in that** the compatibilizer is present in an amount of from 5 to 20 wt.%, preferably of from 8 to 15 wt.%, most preferred of 10 wt.%.

8. Polymer compound according to any of claims 1 to 7 **characterized in that** it additionally contains one or more fillers.

9. Polymer compound according to claim 8 **characterized in that** the filler is selected from the group comprising talc, china clay, calcium carbonate, barium sulfate or mixtures thereof.

10. Polymer compound according to claims 8 or 9 **characterized in that** the filler is contained in an amount of from 5 to 40 wt.%, preferably of from 10 to 30 wt.%, most preferred of 20 wt.%.

11. Pellet comprising the polymer compound according to claims 1 to 10.

12. Method of producing the pellet according to claim 11 comprising melting the polymer compound according to claims 1 to 10, compounding, cooling and granulating it into pellets.

13. Monolayer film obtainable from the polymer compound according to claims 1 to 10 or the pellets according to claim 11.

14. Film comprising two or more layers wherein at least one layer representing at least one of the surface layers forms a release layer and is obtainable from the polymer compound according to claims 1 to 10 or of the pellets according to claim 11.

15. Film according to claim 14 **characterized in that** at least one layer forms a base layer and is obtainable from a polyolefin composition comprising a polyolefin selected from the group comprising high density polyethylene (HDPE), low density polyethylene (LDPE), copolymers of ethylene and alpha-olefins such as linear low density polyethylene (LLDPE), polybutene, homopolymer polypropylene, random copolymer polypropylene, block copolymer polypropylene, polypropylene terpolymers, ethylene vinylester copolymers, ionomers or mixtures thereof, optionally comprising further additives.

16. Method of producing the film according to claims 14 or 15 comprising coextruding the educts of the single layers.

17. System comprising a film according to claims 13 to 15 as a release carrier sheet and an adhesive label, wherein the adhesive label adheres to the release layer of the film which is obtainable from the polymer compound according to claims 1 to 10 or the pellets according to claim 11.

18. System according to claim 17 **characterized in that** the adhesive label comprises a base sheet and an adhesive coating.

19. System according to claim 18 **characterized in that** the base sheet is obtainable from a polyolefin composition, preferably comprising a polyolefin selected from the group comprising high density polyethylene (HDPE), low density polyethylene (LDPE) linear low density polyethylene (LLDPE), polybutene, polypropylene homopolymer, bi-oriented polypropylene (BOPP), random copolymer polypropylene, block copolymer polypropylene, polypropylene terpolymers, ethylene vinylester copolymers, ionomers or mixtures thereof, optionally additionally comprising further additives.

20. System according to claims 18 or 19 **characterized in that** the adhesive coating is acrylic based or polyurethane based.

21. System according to any of claims 17 to 20 **characterized** that the release force for peeling off the adhesive label from the release carrier sheet is ≤ 1 N / 15 mm.
